# DEMANDE DE BREVET EUROPEEN

(11) **EP 2 056 418 A2**
(43) Date de publication de la demande: **06.05.2009**
(21) Numéro de dépôt: 08168376.5
(22) Date de dépôt: 05.11.2008
(51) Int. Cl.: H02G 3/12

(54) **Boîtier encastrable dans une cloison**

(30) Priorité: 05.11.2007 FR 0707751
(71) Demandeur: Fournier, Thierry, 38440 Royas (FR)
(72) Inventeur: Fournier, Thierry, 38440 Royas (FR)
(74) Mandataire: Verriest, Philippe

(57) **Abrégé**

L'invention concerne un boîtier (1) encastrable dans une cloison, en particulier pour encastrer dans une cloison un appareillage électrique, comprenant latéralement des moyens de fixation (7, 27) dans la cloison, la cloison comportant une paroi présentant un côté extérieur et un côté intérieur. Un tel boîtier (1) comporte au moins une butée fixe (27) destinée à prendre appui sur la paroi du côté extérieur de celle-ci, et au moins une butée mobile (7) positionnée sur une languette (6) destinée à être située du côté intérieur de la paroi et destinée à être rapprochée de la butée fixe (27) pour coopération en serrage avec celle-ci de façon à pincer la paroi entre la butée fixe (27) et la butée mobile (7). Le boîtier comporte en outre des moyens de guidage de la languette (6) conçus pour guider la languette (6) suivant une trajectoire d'une position initiale vers une position de pincement.

## Description

L'invention concerne un boîtier encastrable dans une cloison, destiné en particulier à loger un appareillage électrique.

Une cloison comporte de manière générale, à l'avant, une paroi présentant une épaisseur dans laquelle est ménagée un trou. Cette paroi présente un côté extérieur et un côté intérieur. Un tel boîtier est mis en place dans ce trou et sa fixation est obtenue grâce au pincement de la paroi entre des butées fixes qui viennent prendre appui sur le côté extérieur de la paroi et des butées mobiles qui viennent prendre appui sur le côté intérieur de la paroi.

Traditionnellement, la fixation des boîtiers d'encastrement est réalisée par deux vis. Ces vis, lorsqu'elles sont actionnées au moyen d'un tournevis, rapprochent des butées mobiles des butées fixes pour pincer la paroi. Un tel type de dispositif est connu du document DE9311023U.

Cependant, cette action de visser est fastidieuse et entraîne une perte de temps qui est d'autant plus importante lorsqu'un électricien est amené à poser un grand nombre de boîtiers.

Pour pallier à ces inconvénients, il est connu du document FR2 762 941 ou du document WO9614682, un boîtier encastrable dans une cloison, en particulier pour encastrer dans une cloison un appareillage électrique, comprenant un corps de boîtier et des moyens de fixation latéraux du corps de boîtier dans la cloison, la cloison comportant une paroi présentant un côté extérieur et un côté intérieur, les moyens de fixation comportant :
- au moins une butée fixe destinée à prendre appui sur la paroi du côté extérieur de celle-ci la butée fixe étant positionnée sur le corps du boîtier, et
- au moins une languette comprenant une butée mobile destinée à être située du côté intérieur de la paroi et à être rapprochée de la butée fixe pour coopération en serrage avec celle-ci de façon à pincer la paroi entre la butée fixe et la butée mobile,
- des moyens de guidage de la languette conçus pour guider la languette suivant une trajectoire d'une position initiale vers une position de pincement.

La mise en oeuvre d'un tel boîtier est réalisée en quatre étapes successives. Dans un premier temps, les languettes et la butée sont détachées de la paroi latérale du boîtier pour être mises en place dans le boîtier. Ensuite, afin que les butées mobiles ne s'opposent pas à l'introduction du boîtier dans le trou, deux volets permettent de maintenir ces butées à l'intérieur du boîtier pendant son introduction dans le trou. Le boîtier est alors positionné dans le trou de la paroi de la cloison jusqu'à atteindre la butée fixe. Puis, l'opérateur doit pousser les butées mobiles vers l'extérieur à l'encontre du volet pour que les butées fassent saillie par rapport à la paroi latérale du boîtier. Enfin, une traction est opérée sur les tirettes permettant alors une fixation du boîtier par pincement entre les butées fixes et mobiles sans utiliser un quelconque vissage.

L'utilisation d'un tel boîtier présente l'inconvénient majeur selon lequel il est difficile de mettre en place les butées mobiles. En particulier, l'opération consistant à repousser les butées mobiles vers l'extérieur est une opération complexe, car il faut introduire un outil dans le boîtier ou repousser ces butées avec les doigts, dans un espace restreint. Il se peut de plus, qu'un isolant, tel que la laine de roche par exemple, disposé à l'arrière de la paroi dans la cloison, s'oppose au déplacement de cette butée mobile vers l'extérieur du boîtier.

L'invention vise à résoudre en tout ou partie ces inconvénients en proposant un boîtier dont les caractéristiques permettent une insertion du boîtier rapide ainsi qu'une fixation aisée.

A cet effet, l'invention consiste pour cela en un boîtier du type précité caractérisé en ce que les moyens de guidage comprennent une rampe conçue pour coopérer avec une partie de la butée mobile, la rampe de guidage comprenant une première portion située à une première distance par rapport à la paroi latérale du corps du boîtier de façon à ce que la butée mobile soit située entièrement à l'intérieur d'une enceinte délimitée par la paroi latérale du corps du boîtier lorsqu'elle coopère avec cette première portion, une deuxième portion de guidage située à une deuxième distance par rapport à la paroi latérale du corps du boîtier de façon à ce que la butée mobile coopérant avec cette portion de la rampe fasse saillie vers l'extérieur de la paroi latérale du corps du boîtier et une portion de transition entre la première et la seconde portions, le boîtier comprenant des moyens de retenue de la languette conçus pour maintenir la portion de la languette comportant la butée mobile à l'intérieur de l'enceinte délimitée par la paroi latérale du boîtier.

Un tel dispositif présente l'avantage considérable d'éloigner la butée mobile à une distance de la paroi latérale à l'intérieur de l'enceinte du boîtier permettant de faciliter le passage de celui-ci dans un trou aménagé dans la cloison, puis de permettre lors d'une simple traction sur la languette, de déplacer la butée vers l'extérieur du boîtier et de guider celle-ci vers la portion de pincement de la paroi de la cloison.

Une telle disposition permet une amélioration considérable de la mise en place d'un boîtier électrique encastrable et de son système de fixation.

Selon un mode de réalisation de l'invention, les moyens de retenue sont constitués par un préformage de la languette.

Selon un autre mode de réalisation de l'invention, les moyens de retenue sont constitués par une patte de retenue ménagée dans un logement de réception de la languette dans le corps du boîtier

Avantageusement, la languette comprend des moyens de crantage coopérant avec des moyens de crantage du corps du boîtier de forme complémentaire permettant le déplacement de la languette dans un seul sens.

Cette disposition présente l'avantage d'éviter le glissement de la languette dans les moyens de guidage.

Avantageusement, le boîtier comprend des moyens de déblocage des moyens de crantage, permettant de supprimer la mise en prise des moyens de crantage de la languette et des moyens de crantage du corps du boîtier.

De préférence, les moyens de déblocage des moyens de crantage sont constitués par une patte élastique portant les moyens de crantage du corps du boîtier et permettant un mouvement d'éloignement de ces moyens de crantage par rapport aux moyens de crantage de la languette.

Selon une caractéristique de l'invention, les languettes comportent une zone affaiblie située à une distance de la butée mobile inférieure à la distance entre les butées fixes et mobiles en position de pincement de la paroi de la cloison.

Cette caractéristique permet de fournir un boîtier encastrable dont la traction exercée sur les languettes entraîne la rupture au niveau de la zone affaiblie lorsque la position de pincement de la paroi de la cloison entre les butées fixes et les butées mobiles est atteinte. Ainsi, la portion de la languette sortant de la cloison peut être enlevée sans nécessiter l'utilisation d'un outil supplémentaire.

Avantageusement, la rampe comporte une fente conçue pour permettre la réalisation par injection des moyens de retenue.

L'invention sera mieux comprise à l'aide de la description détaillée qui est exposée ci-dessous en regard du dessin annexé dans lequel :

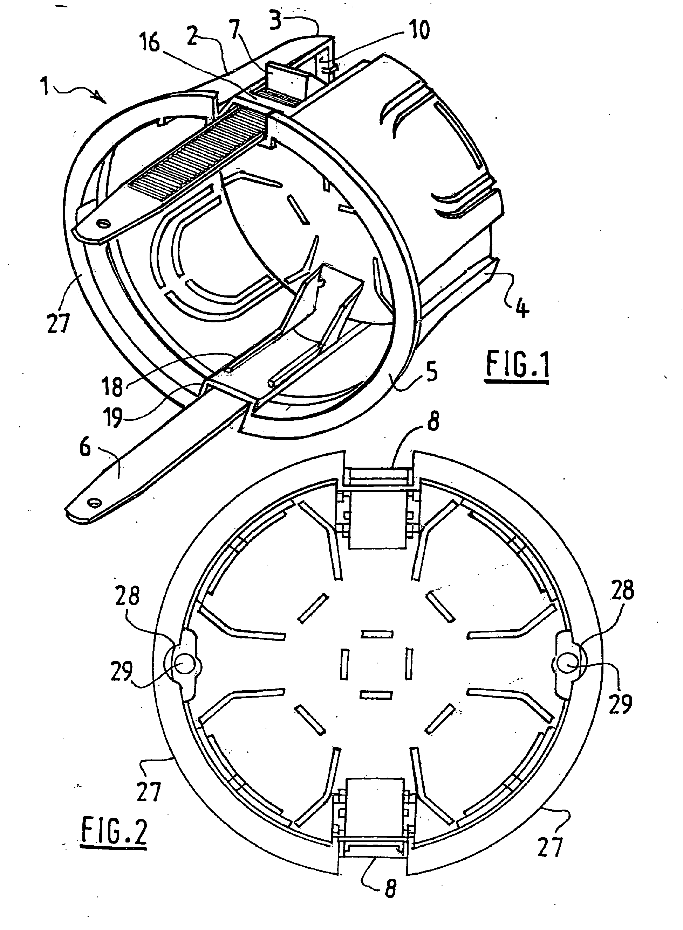

La figure 1 est une vue en perspective d'un boîtier encastrable ;
La figure 2 est une vue de la face extérieure du boîtier encastrable ;

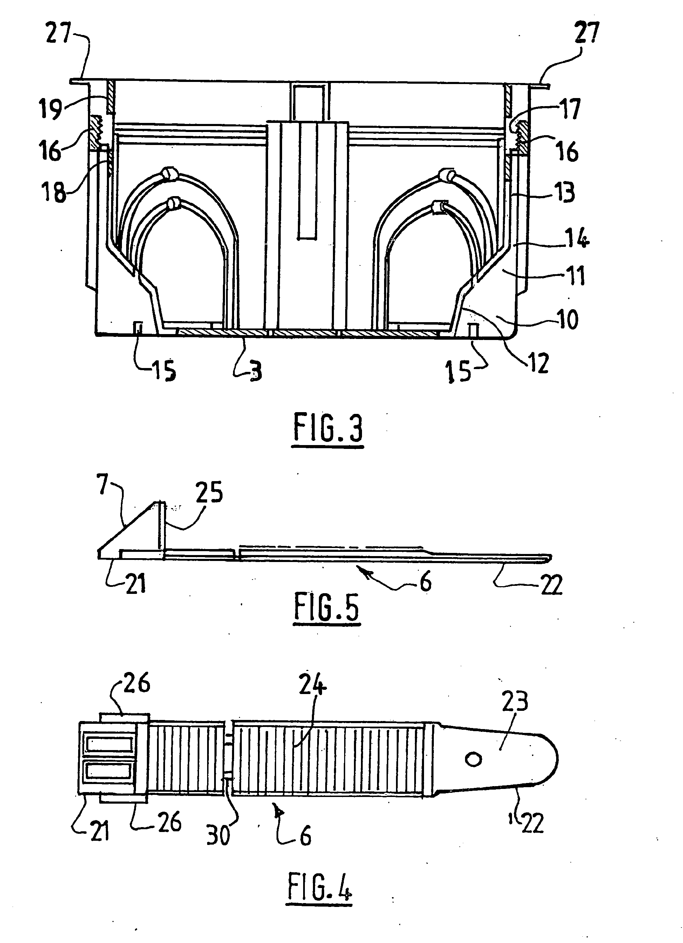

La figure 3 est une vue en coupe transversale selon la ligne III-III de la figure 2 ;
La figure 4 est une représentation schématique d'une languette vue du côté cranté ;
La figure 5 est une vue en coupe d'une languette ;
La figure 6 est une vue en coupe du boîtier lorsque la languette est en position initiale ;
La figure 7 est une vue en coupe du boîtier lorsque la languette est en position finale.
La figure 8 est une vue en coupe d'un boîtier avec des languettes préformées selon un second mode de réalisation de l'invention.
La figure 9 est une vue en perspective d'une variante de réalisation de l'invention comprenant des moyens de déverrouillage.

Dans le mode de réalisation illustré, un boîtier 1 encastrable selon l'invention comprend un corps de boîtier présentant une paroi latérale 2 et une paroi de fond 3, la paroi de fond 3 étant disposée de manière transversale à la paroi latérale 2.

La paroi latérale 2 comporte une première et une seconde extrémités, respectivement 4 et 5. Plus précisément, la paroi de fond 3 est disposée au niveau de la première extrémité 4 de la paroi latérale 2. La paroi latérale 2 est de forme sensiblement cylindrique permettant de délimiter une enceinte.

Le corps du boîtier 1 comprend également des moyens de guidage de deux languettes 6 portant chacune une butée mobile 7.

Ces moyens de guidage comprennent deux ouvertures 8 diamétralement opposées ménagées dans la paroi latérale 2 et formant chacune un logement de réception d'une languette 6 dans le corps du boîtier 1. Au voisinage de chacune des ouvertures 8, la paroi latérale 2 se prolonge par une paroi transversale 10 orientée vers l'intérieur du corps du boîtier 1. Plus précisément, une rampe 11 est disposée sur chacune des parois transversales 10.

La rampe 11 comprend une première et une seconde portions de guidage, respectivement 12, 13, coopérant avec une partie de la butée mobile 7. La première portion 12 est située au voisinage du fond 3, à une première distance par rapport à la paroi latérale 2 du corps du boîtier 1 de façon à ce que la butée mobile 7 soit située entièrement à l'intérieur de l'enceinte délimitée par la paroi latérale 2 du corps du boîtier 1. La seconde portion 13 de guidage est située au voisinage de la seconde extrémité 5 de la paroi latérale 2, à une deuxième distance par rapport à la paroi latérale 2 du boîtier 1 de façon à ce que la butée mobile coopérant avec cette portion de la rampe fasse sailli vers l'extérieur de la paroi latérale du boîtier. II est à noter que la deuxième distance est inférieure à la première distance. Une portion de transition 14 joint la première portion 12 et la seconde portion 13.

Chaque paroi transversale 10 comporte en outre des moyens de retenue de la butée mobile 7 au voisinage du fond 3 de façon à maintenir la butée mobile 7 dans l'enceinte délimitée par la paroi latérale 2. Les moyens de retenue comprennent un ergot 15.

Il est à noter que la rampe 11 comporte une fente conçue pour permettre la réalisation par injection de l'ergot 15.

Les moyens de guidage comprennent en outre trois organes de guidage de la languette 6. Au voisinage de la seconde extrémité 5, un premier organe 16 disposé de manière à former un pont 16 plan est positionné au dessus de chaque ouverture 8, assurant la continuité de la paroi latérale 2. Ce pont 16 comporte sur sa surface intérieure des moyens de crantage. Ces moyens de crantage comprennent des crans 17 en dents de scie orientés vers la seconde extrémité 5 de la paroi latérale 2 permettant le déplacement des languettes 6 dans un seul sens. Les deux autres organes, respectivement 18 et 19, de guidage sont disposés de part et d'autre du pont 16. Ils sont situés dans un plan parallèle à celui du pont 16, de façon à être compris dans l'enceinte délimitée par la paroi latérale 2. Plus précisément, les trois organes 16, 18, 19 de guidage sont disposés de manière à prendre en sandwich la languette 6.

Le boîtier 1 comporte en outre deux languettes 6 disposées au niveau des ouvertures 8 de la paroi latérale 2, transversalement à la paroi de fond 3. Il est à noter qu'une portion de la languette 6, située au voisinage de la seconde extrémité 5 du boîtier 1, fait saillie vers l'extérieur par rapport à la paroi latérale 2.

Chaque languette 6 est moulée en une seule pièce. Chacune comprend un corps longitudinal comportant une première et une seconde extrémité, respectivement 21, 22. Chaque languette 6 se prolonge au niveau de sa seconde extrémité 22 par une tirette 23. Cette tirette 23 présente une surface sensiblement plane.

Des moyens de crantage sont disposés sur une partie d'une des faces du corps longitudinal entre les deux extrémités 21 et 22 de chaque languette 6. Plus précisément, ces moyens de crantage sont disposés entre la butée mobile 7 et la tirette 23. Ces moyens de crantage comprennent des crans 24 en dents de scie de forme complémentaire des crans 17 en dents de scie disposés au niveau du pont 16.

Chaque languette 6 comprend une butée mobile 7 disposée au voisinage de sa première extrémité 21. La butée mobile 7 comprend une surface plane 25 faisant saillie qui est disposée de manière sensiblement transversale par rapport au corps longitudinal de la languette 6.

La butée mobile 7 comporte un organe en saillie 26 disposé latéralement et de part et d'autre de la surface plane 25. Cet organe en saillie 26 est destiné à coopérer avec les moyens de guidage et en particulier avec la rampe 11, disposés sur les parois transversales 10 du boîtier 1.

Chaque languette 6 comporte en outre une zone affaiblie 30. Cette zone affaiblie 30 est située à une distance de la butée mobile 7 dont la valeur est inférieure à celle de la distance entre les butées fixes 27 et mobiles 7 en position de pincement de la cloison. Ainsi lorsque la position de pincement de la paroi 31 de la cloison est atteinte, la languette 6 se rompt au niveau de cette zone affaiblie 30.

Le boîtier 1 comprend en outre une butée fixe 27 disposée de manière transversale à la paroi latérale 2 du boîtier au voisinage de sa seconde extrémité 5. La butée fixe 27 comprend deux collerettes 27 formant un épaulement faisant saillie vers l'extérieur. Chaque collerette 27 est située sur une portion de la périphérie de la paroi latérale 2 de manière à laisser libres deux parties diamétralement opposées situées au niveau des ouvertures 8. Chaque collerette 27 présente une encoche 28 située à mi-distance de son pourtour pour permettre le passage d'une vis 29 de façon à renforcer la fixation du boîtier 1 dans la cloison. La butée fixe 27 est destinée à coopérer avec les butées mobiles 7 de façon à permettre la fixation du boîtier 1 dans la cloison par pincement.

Un utilisateur souhaitant encastrer un appareillage électrique, tel qu'un interrupteur dans une cloison sèche, par exemple, se munit d'un tel boîtier 1 encastrable. Une telle cloison comporte à l'avant, une paroi 31 présentant une épaisseur et comportant un côté extérieur 32 et un côté intérieur 33. II est à noter que si la cloison ne présente pas un trou destiné à contenir un tel boîtier 1, l'utilisateur en réalise un.

L'utilisateur se munit du boîtier 1 et l'insère dans le trou de la cloison jusqu'à ce que la butée fixe 27 vienne prendre appui sur le côté extérieur 32 de la paroi 31 de la cloison autour du trou de la paroi. La butée fixe 27 permet de limiter l'insertion du boîtier 1 encastrable dans le trou la cloison à équiper.

Le boîtier 1 est alors positionné. L'utilisateur doit ensuite assurer la fixation du boîtier 1 dans le trou de la cloison afin d'éviter toute extraction intempestive.

A cet effet, il utilise les moyens de fixation du boîtier 1 et en particulier la butée fixe 27 et les deux butées mobiles 7.

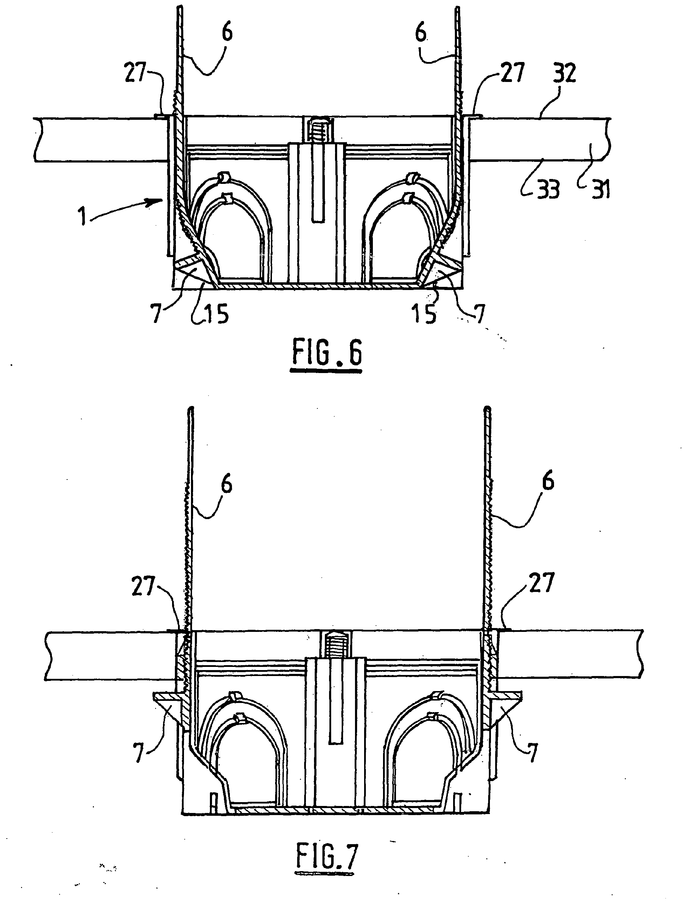

II est à noter que lorsque le boîtier est inséré dans la cloison, chaque butée mobile 7 est en position initiale, comme représenté à la figure 6. Plus précisément, la butée mobile 7 est maintenue à l'intérieur de l'enceinte délimitée par la paroi latérale 2 du boîtier 1 par les moyens de retenue 15.

Pour mettre en oeuvre la fixation du boîtier 1 dans la cloison, l'utilisateur saisit la tirette 23, située sur la seconde extrémité 22 de la languette 6, entre ses doigts ou bien à l'aide d'une pince par exemple. Puis, il exerce une traction sur la languette 6.

Cette traction va entraîner le déplacement de la languette 6 le long des moyens de guidage 11, 12, 13, 14 disposés dans l'ouverture 8 de la paroi latérale 2. Plus précisément, sous l'effet de cette traction, la butée mobile 7, et en particulier l'organe en saillie 26 se désengage des moyens de retenue 15 pour coopérer avec la première portion 12 puis la portion de transition 14 qui pousse la butée mobile 7 vers l'extérieur. La coopération de l'organe en saillie 26 avec la portion de transition 14 entraîne la poussée de la butée mobile 7 vers l'extérieur de l'enceinte délimitée par la paroi latérale 2 du boîtier 1.

Ensuite, la butée mobile 7 coopère avec la seconde portion 13 de guidage qui permet de maintenir la butée mobile 7 à l'extérieur, comme représenté à la figure 7. La butée mobile 7 se déplace dans cette portion jusqu'à atteindre la position de pincement de la cloison entre la butée fixe 27 et la butée mobile 7 de chaque ouverture 8. Lorsque la position de pincement de la paroi 31 de la cloison est atteinte, l'utilisateur continue d'exercer une traction sur les tirettes. Cette traction va entraîner la rupture de la languette 6 au niveau de la zone affaiblie 30. En effet, la zone affaiblie 30 se rompt lorsque le pincement de la paroi 31 de la cloison entre les butées fixes 27 et les butées mobiles 7 est suffisant. Comme la zone affaiblie 30 est située à une distance de la butée mobile 7 dont la valeur est inférieure à celle de la distance entre les butées fixes 27 et les butées mobiles 7 en position de pincement de la paroi de la cloison, la languette 6 ne fait pas saillie au côté extérieur 32 de la paroi 31 lorsqu'elle se rompt.

La languette 6 est ainsi guidée suivant une trajectoire d'une position initiale correspondant au positionnement de la butée mobile 7 à l'intérieur de l'enceinte délimitée par la paroi latérale 2 du corps du boîtier 1 lorsque les moyens de guidage sont situés dans la première portion 12 de la rampe 11 vers une position finale, correspondant au pincement de la paroi 31 entre la butée fixe 27 et les butées mobiles 7, dans laquelle les moyens de guidage de la butée mobile 7 sont situés dans la seconde portion 13 de la rampe 11. Lorsque la languette 6 est en position finale, elle se rompt au niveau de sa zone affaiblie 30 de sorte à ne pas faire saillie vers l'extérieur par rapport à la paroi 31 de la cloison.

L'orientation particulière des crans 17, 24 permet le déplacement de la languette 6 par encliquetage le long de la rampe 11 dans un seul sens. La languette 6 est ainsi déplacée jusqu'à ce que la butée mobile 7 soit positionnée, destinée à être située du côté intérieur 33 de la paroi 31, se rapproche de la butée fixe 27 afin de coopérer en serrage avec celle-ci. Plus précisément, la butée mobile 7 se rapproche de façon à ce que la paroi soit pincée entre la butée fixe 27 et les butées mobiles 7.

Enfin, l'utilisateur introduit l'appareil électrique dans l'enceinte délimitée par la paroi latérale 2 du corps du boîtier 1, prévue à cet effet.

Selon une variante, il est à noter que l'utilisateur peut introduire une vis 29 afin d'améliorer la fixation. La collerette 28 réalisée sur chacun des épaulements 27, est destinée à faciliter l'insertion de la vis 29.

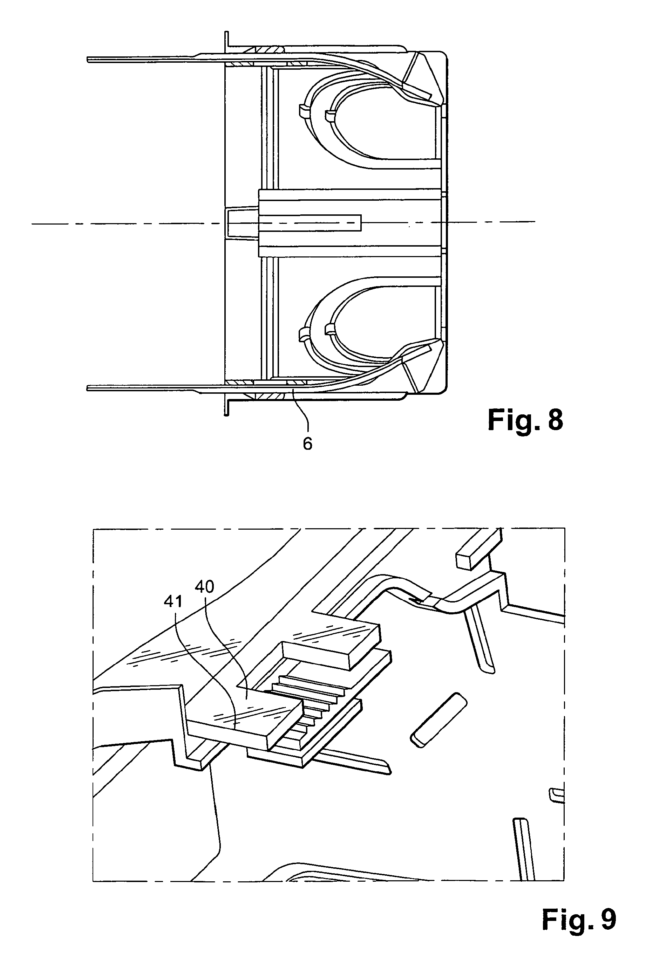

Selon un autre mode de réalisation représenté sur la figure 8, les moyens de retenue sont réalisés par un préformage des languettes 6 de façon à ce que le profil des languettes soit adapté au profil de la rampe de guidage 11.

Ainsi, la languette qui est maintenue en position sur une partie de sa longueur par les moyens de guidage se positionne dans contre la rampe, la butée mobile étant située entièrement à l'intérieur d'une enceinte délimitée par la paroi latérale 2 du boîtier 1.

Selon une variante de réalisation représentée sur les figures 8 et 9, il est possible de prévoir que les moyens de crantage 17 soient disposés sur une patte élastique 40 s'étendant à partir du pont 16.

Ces dispositions permettent d'écarter les moyens de crantage 17 des moyens de crantages complémentaires afin de réaliser un déblocage des moyens de crantage et de permettre ainsi de repousser la languette pour retirer le boîtier de la cloison sur laquelle il est fixé.

L'extrémité 41 de cette patte élastique, à l'opposé de sa zone de liaison avec le pont 16, comprend une cavité permettant de loger la pointe d'un outil, par exemple d'un tournevis, afin de faciliter la mise en mouvement de cette patte.

## Revendications

**1.** Boîtier (1) encastrable dans une cloison, en particulier pour encastrer dans une cloison un appareillage électrique, comprenant un corps de boîtier et des moyens de fixation (6, 7, 27) latéraux du corps de boîtier dans la cloison, la cloison comportant une paroi (31) présentant un côté extérieur (32) et un côté intérieur (33), les moyens de fixation (6, 7, 27) comportant :
- au moins une butée fixe (27) destinée à prendre appui sur la paroi (31) du côté extérieur (32) de celle-ci, la butée fixe étant positionnée sur le corps du boîtier, et
- au moins une languette (6) comprenant une butée mobile (7) destinée à être située du côté intérieur (33) de la paroi (31) et à être rapprochée de la butée fixe (27) pour coopération en serrage avec celle-ci de façon à pincer la paroi (31) entre la butée fixe (27) et la butée mobile (7),
- des moyens de guidage (11, 12, 13, 14) de la languette (6) conçus pour guider la languette (6) suivant une trajectoire d'une position initiale vers une position de pincement,
**caractérisé en ce que**
les moyens de guidage (11, 12, 13, 14) comprennent une rampe (11) conçue pour coopérer avec une partie de la butée mobile (7), la rampe (11) de guidage comprenant une première portion (12) située à une première distance par rapport à la paroi latérale (2) du boîtier (1) de façon à ce que la butée mobile (7) soit située entièrement à l'intérieur d'une enceinte délimitée par la paroi latérale (2) du corps du boîtier (1) lorsqu'elle coopère avec cette première portion, une deuxième portion (13) de guidage située à une deuxième distance par rapport à la paroi latérale (2) du corps du boîtier (1) de façon à ce que la butée mobile (7) coopérant avec cette portion (13) de la rampe (11) fasse saillie vers l'extérieur de la paroi latérale (2) du corps du boîtier (1) et une portion de transition (14) entre la première et la seconde portions (12, 13), le boîtier comprenant des moyens de retenue de la languette (6) conçus pour maintenir la portion de la languette (6) comportant la butée mobile (7) à l'intérieur de l'enceinte délimitée par la paroi latérale (2) du boîtier (1).

**2.** Boîtier selon la revendication 1, dans lequel les moyens de retenue sont constitués par un préformage de la languette (6).

**3.** Boîtier selon la revendication 1, dans lequel les moyens de retenue sont constitués par une patte de retenue (15) ménagée dans un logement de réception de la languette dans le corps du boîtier4. Boîtier (1) encastrable dans une cloison selon l'une des revendications précédentes, dans lequel la languette (6) comprend des moyens de crantage (24) coopérant avec des moyens de crantage (17) du corps du boîtier de forme complémentaire permettant le déplacement de la languette (6) dans un seul sens.

**5.** Boîtier selon la revendication 4, comprenant des moyens de déblocage (40) des moyens de crantage, permettant de supprimer la mise en prise des moyens de crantage (24) de la languette et des moyens de crantage (17) du corps du boîtier.

**6.** Boitier selon la revendication 5, dans lequel les moyens de déblocage des moyens de crantage sont constitués par une patte élastique (40) portant les moyens de crantage (17) du corps du boîtier et permettant un mouvement d'éloignement de ces moyens de crantage (17) par rapport aux moyens de crantage (24) de la languette.

**7.** Boîtier (1) encastrable dans une cloison selon l'une des revendications précédentes, dans lequel les languettes (6) comportent une zone affaiblie (30) située à une distance de la butée mobile (7) inférieure à la distance entre les butées fixes (27) et mobiles (7) en position de pincement de la paroi (31) de la cloison.

**8.** Boîtier (1) encastrable dans une cloison selon l'une des revendications précédentes, dans lequel la rampe (11) comporte une fente conçue pour permettre la réalisation par injection des moyens de retenue (15).
